# EUROPEAN PATENT SPECIFICATION

(11) **EP 4 565 912 B1**
(45) Date of publication and mention of the grant of the patent: **02.09.2026**
(21) Application number: 23742156.5
(22) Date of filing: 13.07.2023
(51) Int. Cl.: G02B 13/14, G02B 21/00, G02B 21/02

(54) **MICROSCOPE OBJECTIVE**
MIKROSKOPOBJEKTIV
OBJECTIF DE MICROSCOPE

(30) Priority: 02.08.2022 NL 2032667
(43) Date of publication of application: 11.06.2025
(73) Proprietor: Flash Pathology B.V., 1105 BP Amsterdam (NL)
(72) Inventor: VAN MOURIK, Frank, 1105 BP Amsterdam (NL)
(74) Representative: De Vries & Metman
(86) International application number: PCT/NL2023/050377
(87) International publication number: WO 2024/030017

(56) References cited:
- JP-A- 2008 197 127
- JP-A- H11 316 337
- HANNINEN ADAM M ET AL: "Nonlinear optical microscopy with achromatic lenses extending from the visible to the mid-infrared", APL PHOTONICS, AMERICAN INSTITUTE OF PHYSICS, 2 HUNTINGTON QUADRANGLE, MELVILLE, NY 11747, vol. 4, no. 8, 2 August 2019 (2019-08-02), XP012240111, DOI: 10.1063/1.5111406
- GABRIEL C. BIRCH ET AL: "IMPROVED CHROMATIC PERFORMANCE OF ENDOMICROSCOPE OPTICS FORBROADBAND IMAGING", ENDOSCOPIC MICROSCOPY V, EDITED BY GUILLERMO J. TEARNEY, THOMAS D. WANG, PROC. OF SPIE, PO BOX 10 BELLINGHAM WA 98227-0010, USA, vol. 7558, 24 February 2010 (2010-02-24), pages 75580P-1 - 75580P-7, XP040548615, DOI: 10.1117/12.842049

## Description

### Field of the invention

The disclosure relates to microscope objectives, and in particular, though not exclusively, to a microscope objective for a non-linear microscopy system.

### Background of the invention

Traditionally, optical pathology transmission microscopy relies on making thin slices from a specimen to obtain depth information. This is a time-consuming procedure, and hence not very suitable for intrasurgical use. Furthermore, the creation of thin slices typically requires fixation and staining of the specimen, which can affect properties of the specimen. Hence, faster pathology methods that do not require slicing and/or other extensive, time-consuming preparation of the specimen are required.

Confocal microscopy can partly overcome the need for creating thin slices by spatial filtering of light coming from the sample. This way, the detected light is limited to light coming from the focus of the illumination source. By moving the focus through the specimen, depth information may be obtained. The signal can be created through auto-fluorescence and/or staining with fluorescent dyes.

The use of non-linear microscopy such as second harmonics generation, third harmonics generation, and multi-photon fluorescence microscopy may yield contrast and provide multi-modal information without any preparation of the sample. Non-linear microscopy can furthermore improve image quality by generating signals practically exclusively in the focus of the illuminated spot, with a very steep drop-off away from the focus. Typically, a high-intensity infrared pulsed laser source is used to generate an illuminated spot, while the signals from the sample are detected in the visible and ultraviolet range. For measuring thick (e.g., unsliced, possibly even unexcised) samples, epidetection is generally used, i.e., the lens system that focusses the light into the sample is also used for collecting the signals from the sample. Therefore, a microscope objective with a very broad spectral transmission window should be used, typically ranging from at least the near-infrared to the near-ultraviolet. For example, a laser source with a 1060 nm wavelength would need a high transmission from about 350-1100 nm.

However, currently available microscope objectives are typically optimised for either infrared use or ultraviolet use, and have very poor or even no transmission for light outside the optimised range. In particular, currently available microscopy objectives designed for confocal microscopy are optimized for imaging the full spectral window that is used, requiring very complex apo-chromatic correction for the spatial filtering of the detected light to work. This typically results in the use of glasses such as Schwer Flint with limited or no UV transmission.

Furthermore, in order to create a high-resolution signal, the focal spot of the illuminating light should be very tight. This typically requires a microscope objective with a high numerical aperture (NA) and excellent focussing properties over the full field of view - which in pathology systems needs to be very large, e.g. (0.5 mm)² or more. Moreover, a flat focal field is very desirable. To the extent that microscope objectives with a sufficiently broad transmission range exist, they have compromised on one of the other parameters.

For example, US2016/0116724 A1 discloses a microscope objective with a high numerical aperture and a wide field of view, but does not disclose transmission outside the visible range.

JP 2008/197127 A describes a microscope objective for a multiphoton-excitation laser scanning microscope.

Hence, there is a need in the art for a microscope objective or similar optical system with a high transmission from at least the near-infrared to the near-ultraviolet, which combines a high numerical aperture with a large field of view.

### Summary of the invention

It is an aim of embodiments in this disclosure to provide a microscope objective for non-linear microscopy that avoids, or at least reduces the drawbacks of the prior art.

In a first aspect, this disclosure relates to an optical system for a non-linear microscope comprising, in order from an object side, a first lens group, one or more optical elements, and a second lens group. The first lens group is configured for focussing illumination light of a first wavelength on a sample and for collecting light of at least a second wavelength from the sample. The first wavelength may be selected between 700 nm and 1200 nm, preferably between 1000-1200 nm or between 750-850 nm, more preferably between 1040-1080 nm or about 800 nm. Preferably, the first lens group has a transmission coefficient of at least 0.5, more preferably at least 0.6, for light of the first wavelength, and at least 0.3, preferably at least 0.5, more preferably at least 0.6 for light of the at least second wavelength. The one or more optical elements are configured for splitting the light of the at least second wavelength from the light of first wavelength. The second lens group is configured for correcting an aberration of the first lens group for the first wavelength. The optical system may be configured to be substantially object-space telecentric for light of the first wavelength, preferably the deviation from telecentricity being smaller than 1 mrad.

The optical system may be referred to as a microscope objective. As used herein, the term 'microscope objective' refers to an optical system comprising one or more lenses for focusing light on a sample and/or collecting light from the sample, that is designed as a complete unit.

If the microscope objective is substantially object-space telecentric for the light of the first wavelength (i.e., the excitation light), the focus geometry is substantially constant throughout the field of view, with a substantially constant angle and numerical aperture. As a result the resolution is substantially constant over the field of view, as is the contrast and signal level.

In a typical embodiment, the light of the at least second wavelength comprises light of a second wavelength, different from the first wavelength, and light of a third wavelength, different from the first and second wavelengths.

The first lens group can have one or more aberrations, for example, a chromatic aberration or distortion. The second lens group is configured to correct the one or more aberrations of the first lens group for the light of the first wavelength, for example, the second lens group may have a chromatic aberration or distortion for the first wavelength that is complementary to the chromatic aberration or distortion of the first lens group.

By splitting the microscope objective into a first and a second lens group, and splitting away the light of the detection wavelengths (i.e., the second and third wavelength) in between the first and second lens groups, only the first lens group needs to have a high transmission coefficient over the full spectral window, while the second lens group, which is used to correct the illumination light, can comprise glasses with a poor transmission in the detection range. For example, the first lens group may comprise only lenses made from fluorite and/or (synthetic) quartz and/or crown glasses-which typically have sufficient (near) UV transmission- whereas the second lens group may comprise corrective lenses comprising dense or heavy flint glasses -which typically have poor or no (near) UV transmission.

Non-linear microscopy typically uses a pulsed laser source with a very short pulse duration, e.g., a so-called femtosecond laser with a pulse duration of less than 100 fs. Short pulses necessarily have a relatively large spectral width; for example, a femtosecond laser source width a central wavelength of 1050 nm can have a spectral width (FWHM) of about 20-150 nm. A shorter pulse results in a wider spectral width. As used herein, unless otherwise specified, a wavelength refers to a central wavelength. As used herein, a parameter specified for the first, second, or third wavelength should be understood as applicable to the entire wavelength spectrum of the pulse around the respective wavelength.

As used herein, a lens group comprises at least one lens. A lens group can comprise one or more lens subgroups. The at least one lens can comprise a simple lens and/or a compound lens, e.g., a cemented lens.

In an embodiment, the light of the first wavelength is infrared light and the light of the at least second wavelength comprises visible light and/or ultraviolet light. In a different embodiment, the light of the first wavelength is ultraviolet light and the light of the at least second wavelength comprises visible light and/or infrared light. In such an embodiment, there can be different requirements for different wavelengths; e.g., the transmission coefficient for the visible light may be at least 0.7 and the transmission coefficient for the UV light may be at least 0.5.

In an embodiment, the optical system has a numerical aperture of at least 0.9, preferably at least 1.1, more preferably at least 1.2. Other embodiments may use even higher numerical apertures (NA), e.g. NA ≥ 1.3 or NA ≥ 1.4. The obtained numerical apertures also depends on the immersion fluid that is used. In some embodiments, a non-toxic (biocompatible) immersion fluid may be used, e.g., glycerol or a water/glycerol mixture. This may limit the numerical aperture that may be achieved.

In order to obtain a high optical resolution in a raster scanning microscope, the focusing of the laser light needs to be very tight. Therefore, a high numerical aperture over a large field of view greatly improves the resulting image quality. In non-linear microscopy this argument comes up multiple times *(vide infra),* further increasing the benefit of a high-NA objective. For a numerical aperture larger than 1, an immersion objective may be required which is used in combination with a suitably chosen immersion medium, typically an immersion oil with a refractive index close to that of the first lens.

The lateral (or in-plane) resolution of an optical system is inversely proportional to its NA, the lateral resolution being given by the Abbe diffraction limit: *d_{xy}* = λ/(2NA). The axial (or depth) resolution scales inversely with the square of the NA: *d*_{z}=2λ/NA². When very thin samples are used, as in classical pathology, the axial resolution is not very relevant. However, for microscopy systems that use thick samples (e.g., fresh biopsies or even living tissue), the axial resolution is determined by the dimensions of the focus. This is particularly relevant for non-linear microscopy, such as multi-photon microscopy. It is worth noting that for harmonic signals, due to square/cube scaling of the second/third harmonics signal, a resolution improvement by a factor $\sqrt{2}$ respectively $\sqrt{3}$ is obtained for the second/third harmonics signals.

Moreover, the tight focus is not only important for the resolution, but also for the intensity/quality of the generated signals, which depend in a non-linear fashion on the quality of the focusing. Therefore, both resolution and signal-quality are affected by the focusing properties of the objective.

For third harmonics signals, the generated signals scale with the peak intensity (W/m²) in the focus area to the third power. Since the area of the focus scales inversely with the square of the NA, it follows that, for a small object in a relatively large focus area, the magnitude of the signal generated in the focus scales with NA⁶. For second harmonics signals, the signals scale with the peak intensity to the second power, and hence with NA⁴.

However, a high numerical aperture requires a wide aperture and relatively large diameter lenses. This, in turn, increases the aberrations. By only correcting aberrations for light of the first wavelength, a high numerical aperture may be combined with a substantially aberration-free optical system.

In an embodiment, the optical system is configured to be substantially object-space telecentric, optionally substantially bi-telecentric, for light of the first wavelength. The deviation from telecentricity may be smaller than 1 mrad.

The high dependency of the signal intensity on the (effective) NA manifests itself as a strong drop-off of the signal away from the centre of the image, giving rise to dark corners. This looks like vignetting, but it is typically caused by imperfections/aberrations in the focusing of the laser light away from the centre of the objective, i.e., the usable field of view is aberration limited (rather than diffraction-limited). By making the optical system telecentric, the focusing properties (geometry) are constant over a large field of view. This is improves image quality in particular near the edges of the field of view. A constant magnification over the field of view results in a distortion free image, as there is no parallax error. The apparent shape and location of features on the object do not vary if the piece is moved to a different location in the field of view.

A further advantage of a telecentric system is that it results in a constant magnification for different distances between the focal plane and the objective, and thus, at varying depths. This make it easier to, e.g., combine multiple 2D images into a 3D volume. Furthermore, by eliminating the magnification error, a telecentric objective minimizes unintended and uncontrolled variations in magnification caused by movement of the objective relative to the sample when focusing and moving. This greatly improves optical measurement accuracy.

Moreover, features on a sample can be accurately measured even if they are out of focus because objects that are not at the point of best focus blur symmetrically. This holds the centroid position constant and allows for accurate location of features and edges without distortion. This also makes it easier to combine multiple images. This is particularly relevant in the case of raster scanning, where it is important to be able to accurately recombine the images of the multiple scans together.

Further advantages include equal sightlines to all points in the field of view and equal collected light over the field of view. As a result, all features are visible despite height variations within the sample. Additionally, the light signal gathered by the objective is collected in the same way within the all field of view. It ensures homogenous stimulation and response of the sample and allow comparison of signal intensities in between the different points/areas scanned.

In an embodiment the light of the at least second wavelength comprises light with a wavelength equal to half the first wavelength and/or comprises light with a wavelength equal to one third the first wavelength. This is the case, for instance, when the optical system is used for non-linear microscopy including second and third harmonics signals.

Additionally or alternatively, the light of the at least second wavelength may comprise one or more other wavelengths, typically in the visible and/or (near) infrared spectrum. These wavelengths may be associated with, e.g., multi-photon fluorescence signals.

In an embodiment, the one or more optical elements comprise a first dichroic mirror, preferably a first long-pass dichroic mirror for reflecting light of at least a first spectral part of the one or more second wavelengths, and, optionally, a second dichroic mirror, preferably a second long-pass dichroic mirror for reflecting light of a second spectral part, different from the first spectral part, of the one or more second wavelengths.

In an embodiment, the first dichroic mirror is configured to compensate a distortion, e.g. a shift and/or dispersion, of the light of the first wavelength caused by the second dichroic mirror.

In an embodiment, the first wavelength is between 700 nm and 1200 nm, preferably between 1000-1200 nm, more preferably between 1040-1080 nm, e.g., about 1050 nm or about 1060 nm. Laser sources in this wavelength range can be relatively economical. Moreover, light absorption by water has a local minimum around 1050 nm and becomes substantially higher for longer wavelengths. As biological samples typically contain a significant amount of water, minimising energy absorption by water reduces tissue heating. At shorter wavelengths, the third-harmonics signal shifts into the ultraviolet end of the spectrum, leading again to a higher absorption by the sample, and hence to a weaker signal. As was mentioned above, in such an embodiment, the light of the first wavelength can have a spectral width of more than 35 nm, e.g., about 50 nm or more.

In other embodiments, the laser may have a wavelength of between 700-900 nm, preferably 750-850 nm, more preferably about 800 nm. At about 800 nm, light absorption by water is even lower than at 1050 nm, and both the illumination light and the second harmonic signal (i.e., the light of the second wavelength) are in, or at least close to the visible spectrum, with a generally good availability of suitable optical components (including sensors).

If the first wavelength has a central wavelength between 700-1200 nm, the second wavelength is between 350-600 nm, and the third wavelength is between 233-400 nm. Thus, in these embodiments, the first wavelength is in the infrared range, whereas the third wavelength is in the ultraviolet range. The second wavelength can be either in the visible or ultraviolet ranges.

As used herein, ultraviolet light is defined as light having a wavelength between 10 nm and 400 nm, visible light having a wavelength between 400 nm and 700 nm, while infrared light is defined as light having a wavelength between 700 nm and 1 mm. When an optical element is described as having a parameter value, e.g. a transmission coefficient, for the infrared or ultraviolet range, the relevant subrange is intended, typically between 700 and 1200 nm for the infrared or between 233 and 400 nm for the ultraviolet. For example, when an embodiment with an illumination source with a central wavelength of 1050 nm is discussed, the relevant ultraviolet subrange can be between about 340 nm and about 360 nm.

In an embodiment, the first and second lens groups are configured such that for the light of the first wavelength, the curvature of a focal field is less than 4 µm, preferably less than 2 µm, more preferably less than 1 µm, within a radial distance of at least 250 µm, preferably at least 400 µm from a central axis of the optical system.

In an embodiment, the optical system is configured to have a field of view of at least (0.25 mm)², preferably at least (0.5 mm)². For example, the field of view can comprise a disk with a 0.4 mm radius, or a square with a 0.5 mm side.

In an embodiment, the optical system further comprises corrective elements for the light of the second and/or third wavelengths. For example, the corrective elements may comprise a focussing element such as a focussing lens for focussing the of the at least second wavelengths on one or more detectors. Alternatively or additionally, the corrective elements may be configured to correct a chromatic aberration for the light of the at least second wavelength caused by, e.g., the first lens group.

This disclosure also relates to a scanning non-linear microscopy system comprising an optical system as described above. The microscopy system may further comprise, a laser source, a 2D or 3D scanner system to move a focal spot of the light of the first wavelength over or through the sample, a first detector for detecting light of the second wavelength, and, optionally, a second detector for detecting light of the third wavelength.

The invention will be further illustrated with reference to the attached drawings, which schematically will show embodiments according to the invention. It will be understood that the invention is not in any way restricted to these specific embodiments.

### Brief description of the drawings

Aspects of the invention will be explained in greater detail by reference to exemplary embodiments shown in the drawings, in which:
Fig. 1 schematically depicts a microscopy system according to an embodiment;
Fig. 2A and 2B schematically depict microscope objectives according to an embodiment;
Fig. 3 schematically depicts an example of a lens assembly of an optical system according to an embodiment; and
**Fig. 4A-4C** depict various optical properties of the embodiment depicted in Fig. 3.

Identical reference signs refer to identical, or at least similar elements.

### Detailed description

The embodiments in this disclosure describe methods and systems for obtaining fast images of unprepared samples, e.g., fresh biopsies or living tissue, using non-linear optics for contrast. Non-linear optics may include, for example, second harmonics, third harmonics, autofluorescence, and multi-photon interactions. Thus, the embodiments enable obtaining high-resolution (pathological) images during surgery and/or endoscopy, allowing surgical and/or endoscopic procedures to be adjusted based on pathological information. Although the examples given herein are mainly geared to pathological applications, other applications such as, e.g., industrial quality control are not excluded.

It is an aim of embodiments in this disclosure to provide a microscope objective that is substantially planar, is substantially telecentric, has a high NA over the full field of view, has a diffraction-limited focus of the fundamental wavelength over the full field of view, and has a large field of view.

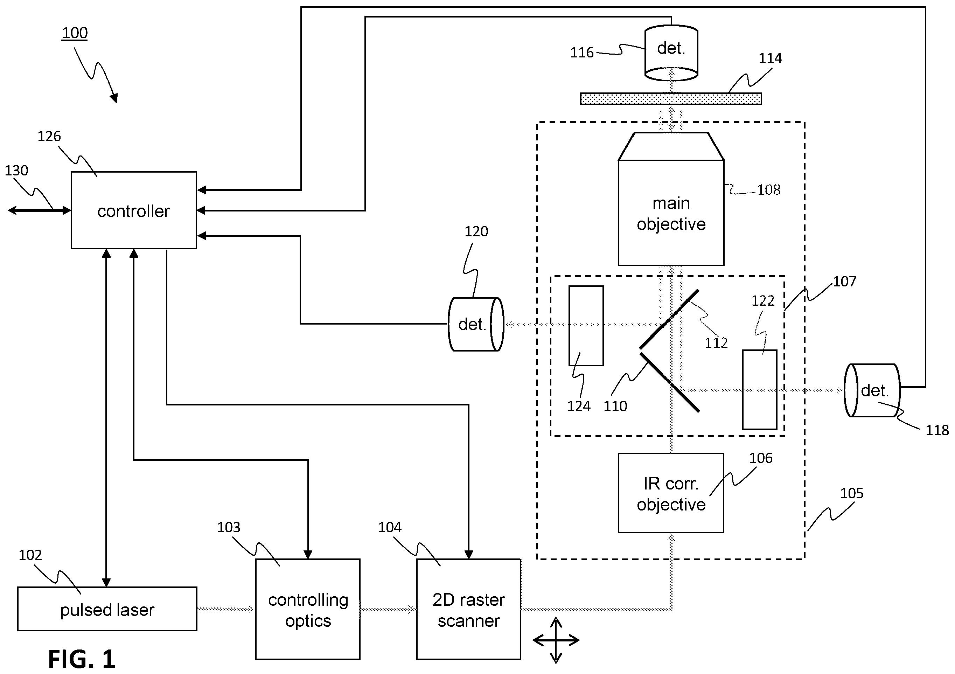

**Fig. 1** schematically depicts a microscopy system according to an embodiment. The microscopy system **100** comprises a light source **102** comprising a laser. In the depicted example, the laser is a pulsed laser, e.g. a femtosecond laser, generating a pulse train, e.g., a mode-locked Ti:sapphire laser or an Yb fibre laser. Selection of a suitable laser source may comprise several trade-offs. In general, a higher peak intensity of each pulse leads to stronger non-linear optics signals. For example, second harmonics scale with the square of the peak intensity and third harmonics scale with the cube of the peak intensity. However, a peak intensity that is too high may lead to so-called non-linear damage in the sample **114.** On the other hand, when peak intensity is too low, longer illumination times may be required to obtain sufficient image quality, which may be obtained by using longer pulses (and thus a higher energy per pulse) and/or a larger number of pulses per pixel. This may, in turn, lead to thermal damage due to overheating of the tissue. The energies for which tissue damage occurs may depend, *inter alia,* on tissue type, pulse intensity, pulse duration, wavelength, numerical aperture, and focus size. In a typical example imaging a biological sample, a system with a numerical aperture of 1 or more and a laser source with a wavelength of about 1060 nm may be used with a pulse duration of less than 100 fs and an energy of about 1 nJ per pulse.

Similarly, the wavelength of the laser source may be selected based on the envisioned use of the microscopy system. Biological samples (including pathology samples) typically have a high water content. Therefore, in order to increase the maximal penetration depth and reduce energy absorption by the sample, it may be beneficial to choose an illumination wavelength with a low water absorption, for example about 800 nm or between 1000-1200 nm, preferably about 1060 nm. The absorption spectrum of water has a minimum around 800 nm, and a local minimum around 1060 nm.

The second-harmonics signal has a wavelength that is half the wavelength of the illumination wavelength, and the third-harmonics signal has a wavelength that is one third of the illumination wavelength. Thus, for an illumination wavelength of 800 nm, the second harmonic signal has a wavelength of 400 nm and the third harmonic signal has a wavelength of 267 nm. The latter is in the (mid-)ultraviolet part of the electromagnetic spectrum, and may have a high absorption by the sample, leading to a weak signal.

Therefore, in microscopy systems that are not configured to measure third harmonic signals, a laser source with a wavelength of about 0.80 µm may be used. In microscopy systems that are configured to measure third-harmonics signals, the laser source may generate light with a wavelength of approximately 1.06 µm. In that case, the second harmonics have a wavelength of about 0.53 µm and the third harmonics have a wavelength of about 0.35 µm. These wavelengths have a relatively low absorption by typical biological samples.

Femtosecond pulses necessarily have a significant spectral width; for example, a femtosecond laser source with a central wavelength of 1050 or 1060 nm can have a spectral width of about 35 nm or more, sometimes even 50 nm or more, depending on the properties of the laser source. This results in a spectral width for the second harmonic signal of about 17.5 nm or more (respectively 25 nm or more), and a spectral width for the third harmonic signal of about 11.7 nm or more (respectively 16.7 nm or more).

If the microscopy system is used for fluorescence imaging, the imaged wavelengths are typically longer than the excitation wavelength. In that case, the laser source may be selected to optimise the fluorescence signal.

Optionally, controlling optics **103** downstream of the laser source may modify the pulse train generated by the laser source **102.** The controlling optics may, e.g., modify the pulse intensity and/or selectively transmit pulses. This way, bursts of pulses may be created. The number of pulses per burst may vary based on, *inter alia,* the sample, the imaging depth, the repetition rate, and the energy per pulse. For example, a pulse picker as described in co-pending application NL2029545 may be used.

The depicted system further comprises a two-dimensional raster scanner **104.** The raster scanner may comprise a galvoscanner comprising a pair of galvomirrors. Other embodiments may use different raster scanners, e.g., based on a MEMS mirror or based on a resonant mirror. The controlling optics **103** may be used to effectively switch off the illumination during the backsweep of the 2D raster scanner **104.**

The system further comprises an objective **105** for focussing the pulses on the sample **114** and for collecting light that has interacted with the sample. The objective comprises a main objective **108** and a correction objective **106,** spatially separated from the main objective. The objective further comprises one or more optical elements **107** positioned in the light beam in between the main objective and the correction objective. The one or more optical elements are configured for splitting the light of the at least second wavelength from the light of first wavelength.

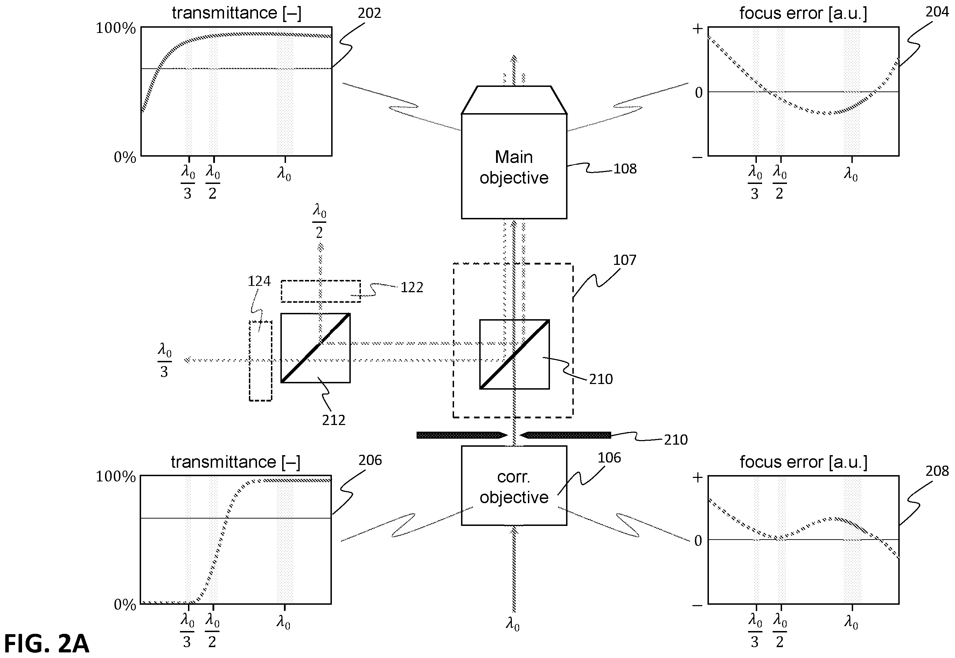

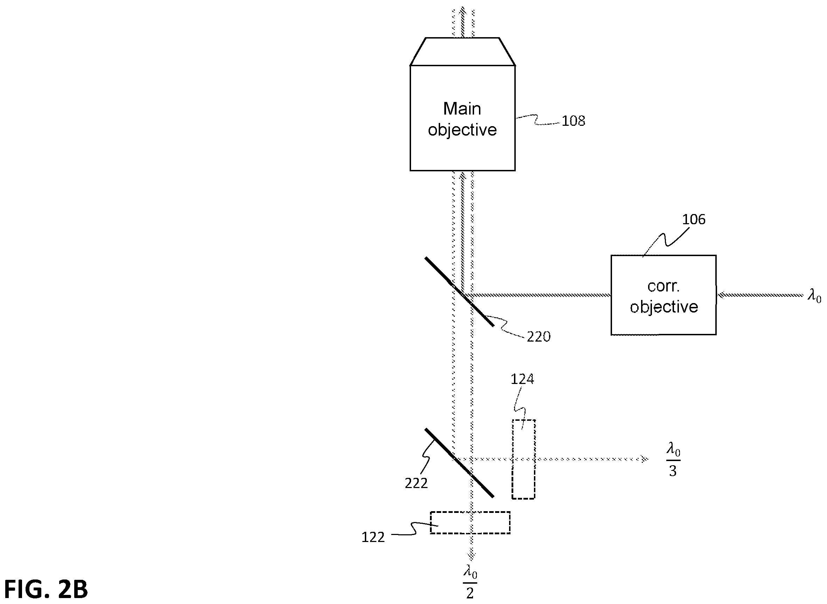

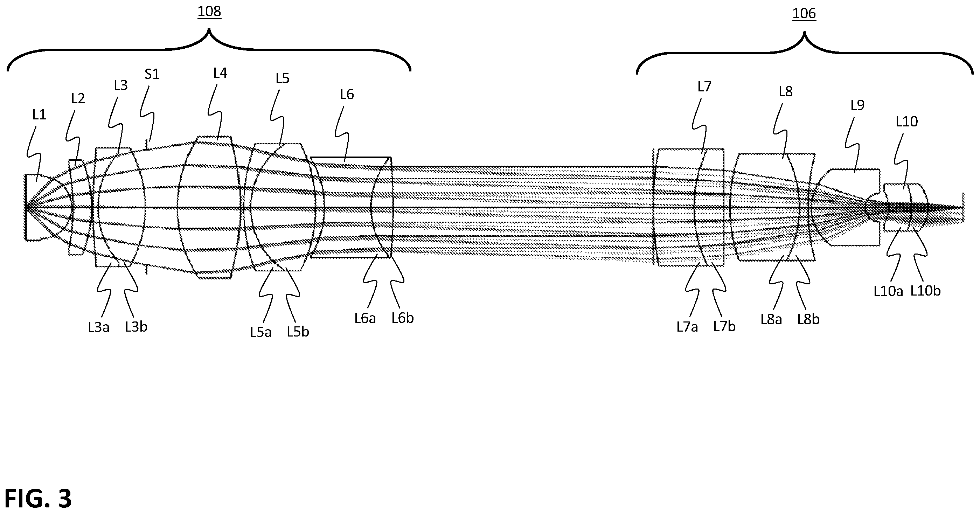

In the depicted example, the one or more optical elements **107** comprise one or more beam splitters **110,112.** In the depicted example, a first beam splitter is configured to deflect the third harmonics signal and a second beam splitter is configured to deflect the second harmonics signal. The first dichroic mirror may be a first long-pass dichroic mirror, and the second dichroic mirror may be a second long-pass dichroic mirror. When two or more beamsplitters are used, the two or more beamsplitters can be configured to compensate for each other's distortions, for example, the first dichroic mirror can be configured to compensate a distortion, e.g. a shift and/or dispersion, of the light of the first wavelength caused by the second dichroic mirror. Optionally, the objective comprises correcting optics **122,124.** The objective is described in more detail below with reference to **Fig. 2****.** An exemplary lens assembly is described below with reference to **Fig. 3****.**

The system further comprises one or more detectors **116-120** for detecting light that has interacted with the sample, e.g., light that is reflected and/or refracted by the sample **114,** and/or light that has passed through the sample. For example, the system may comprise a first detector **116** for detecting transmitted signals on the opposite side of the sample than the objective.

The system may comprise a second detector **118** for detecting light of a second wavelength, e.g. a second harmonics signal or a first fluorescence signal. The light of the second wavelength is diverted to the second detector using beamsplitter **110,** e.g., a first dichroic mirror. Optionally, correcting optics **122** may be placed upstream of the second detector. However, correcting optics may not be necessary, if the focal spot is sufficiently small, so that all received signal may be assumed to be generated in the focal spot.

The system may comprise a third detector **120** for detecting light of a third wavelength, e.g. a third harmonics signal or a second fluorescence signal. The light of the third wavelength is diverted to the third detector using beamsplitter **112,** e.g., a second dichroic mirror. Optionally, correcting optics **124** may be placed upstream of the third detector.

In some embodiments, a single beamsplitter may divert light of both the second and third wavelengths, which may be subsequently split into different signals.

The system may comprise one or more further detectors (not shown) for detecting other signals, e.g., a detector for detecting autofluorescence light.

One or more of the detectors may comprise a photomultiplier tube. In other embodiments, other types of detectors may be used, e.g., based on charge-coupled devices (CCDs). Photomultiplier tubes typically have a very high sensitivity, being able to measure single photons. Thus, they are suitable for detecting the often weak non-linear signals such as second and third harmonics signals also at relatively low, and hence non-damaging, peak light intensities. If photomultiplier tubes are used, controlling optics **103** are preferably configured to generate pulse bursts comprising a plurality of pulses, as this improves linearity of the detector response. A linear response is typically preferred for many applications, such as quantitative analysis of microscopy images, and in particular for Al-based analysis.

The system further comprises a controller **126,** e.g., a field-programmable gate array (FPGA). Preferably, a single controller controls the raster scanner, the data-acquisition system, and, optionally, the controlling optics. This way, real-time control and optimal synchronization may be achieved. The controller may be connectable to a host computer via a data connection **130.** System parameters, such as scan parameters, e.g., number of pulses per burst and energy per pulse, can be loaded from the host computer to the controller, and acquired data can be streamed from the controller to the host computer.

**Fig. 2A** schematically depicts a microscope objective according to an embodiment. The microscope objective comprises, in order from an object side, a first lens group **108** which may also be referred to as the main objective, one or more optical elements **107,** and a second lens group **106** which may also be referred to as a correction objective. The light beam between the first and second lens groups may be essentially collimated.

The first lens group **108** is configured for focussing illumination light of a first wavelength on a sample and for collecting light of at least a second wavelength from the sample. Typically, there is a substantial spectral distance between the light of the first wavelength and at least part of the light of the at least second wavelength. For example, the light of the first wavelength *λ*₀ can be infrared light and the light of the at least second wavelength can comprise visible light *λ*₀/2 and/or ultraviolet light *λ*₀/*3.* Alternatively, the light of the first wavelength can be ultraviolet light and the light of the at least second wavelength can comprise visible light and/or infrared light. This can be the case in, e.g., fluorescence imaging.

For example, the microscope objective may be used for non-linear microscopy based on second and/or third harmonics signals or multi-photon imaging. In that case, the at least second wavelength comprises light with a wavelength that is equal to half the first wavelength and light with a wavelength that is equal to one third the first wavelength.

The first lens group **108** is substantially transparent for light of the first and the at least second wavelengths. In general, a high transmission coefficient for the at least second wavelength, i.e., the signal, is especially important, as a somewhat lower transmission coefficient for the first wavelength can typically be compensated for by increasing the intensity of the light source (or adjusting the controlling optics). However, many glasses have a relatively poor transmission coefficient for ultraviolet light. In case the at least second wavelength comprises ultraviolet light, the first lens group preferably only comprises glasses that are transparent for at least the relevant part of the ultraviolet spectrum. For example, the first lens group may have a transmittance spectrum 202 where the transmission coefficient is above a predetermined threshold value over at least the relevant part of the spectrum, in this case ranging from *λ*₀/3 to *λ*₀, e.g., from about 340 nm to about 1100 nm.

In some embodiments, the first wavelength is between 700 nm and 1200 nm, e.g., between 1000-1200 nm, more in particular between 1040-1080 nm, e.g., about 1050 nm or about 1060 nm. In other embodiments, the laser may have a wavelength of between 700-900 nm, more in particular between 750-850 nm, e.g., about 800 nm. If the first wavelength is between 700-1200 nm, the second harmonics signal has a wavelength between 350-600 nm, and the third harmonics signal has a wavelength between 233-400 nm. Thus, in these embodiments, the first wavelength is in the infrared range, whereas the one or more second wavelengths may comprise light in the visible and/or ultraviolet ranges.

The limitation on the selection of glasses imposed by the transparency requirements, and, possibly, other requirements, may lead to a wavelength-dependent focus error **204,** for example, a chromatic aberration or other optical aberration.

The one or more optical elements **107** are configured for splitting the light of the at least second wavelength from the light of first wavelength. In the depicted embodiment, the one or more optical elements comprise a single beamsplitter **210,** in this case a first dichroic cube beamsplitter. The first dichroic cube beamsplitter is configured to deflect the (collected) light of the at least second wavelength while transmitting the light of the first wavelength.

In the depicted example, a second beamsplitter **212,** in this case a second dichroic cube beamsplitter, for separating light of the second wavelength and light of the third wavelength is provided downstream from the first beamsplitter **210.** In some embodiments, the second beamsplitter may be included in the optical system, whereas in others it can be a separate element or may be left out, depending on the use case. The optional optics **122,124** are described below.

Other embodiments may use a different kind of beamsplitter for the first and/or second beamsplitter, e.g., a plate beamsplitter or a prism.

The second lens group **106** is configured for (pre)correcting the focus error **204** of the light of the first wavelength. For example, the second lens group can have a focus error **208,** e.g., a second chromatic aberration that is complementary to the focus error of the first lens group, e.g. the first chromatic aberration. The second lens group can be optimised to reduce the focus error of the first wavelength, and need not reduce the focus error at other wavelengths, in particular the one or more second wavelengths. This is indicated with the dotted parts of the graphs **204,206** schematically representing the respective focus errors of the first and second lens groups, which do not need to compensate; only the solid part in a relatively small spectral window around the first wavelength is optimised.

By splitting the microscope objective into a first lens group **108** and a second lens group **106,** and splitting away the light of the detection wavelengths (i.e., the one or more second wavelengths) in between the first and second lens groups using the one or more optical elements **107,** only the first lens group needs to have a high transmission coefficient **202** over the full spectral window, while the second lens group, which is used to (pre)correct the illumination light, can comprise glasses with a poor transmission **206** in the detection range. For example, the first lens group may comprise only lenses made from fluorite and/or (synthetic) quartz, whereas the second lens group may comprise corrective lenses comprising dense or heavy flint glasses (which are typically not transparent to UV light).

The objective, and therefore the first lens group **108,** preferably has a high numerical aperture, e.g., at least 1, at least 1.1, or even at least 1.2, to allow a small focal spot. A higher numerical aperture leads to a smaller focal spot size, and hence higher spatial resolution. Moreover, an increase in numerical aperture leads to an increase in peak light intensity, and thus signal intensity. Depending on the immersion fluid used, an even higher numerical aperture may be obtained.

The first and second lens groups may be configured such that the field of view is essentially flat, i.e., the field curvature is minimised for the light of the first wavelength. For example, the objective may have a curvature of a focal field that is less than 4 µm, less than 2 µm, or even less than 1 µm, within a radial distance of at least 250 µm, or at least 400 µm from a central axis of the optical system (as determined for the light of the first wavelength). A flat focal plane enhances image sharpness and provides accurate depth information, as it leads to crisp cross-sections.

The first and second lens groups may be configured such that the field of view is essentially free of geometrical distortions. A geometric-distortion-free field results in sharp and dimension-accurate images. Thus, a regular image-patch can be obtained from scanning (with minimal calibration if any), and the patches can be further processed into larger images with great accuracy by stitching of distortion-free image-patches.

The first and second lens groups may be configured such that the objective is substantially object-space telecentric, or even substantially bi-telecentric. This way, a high resolution and a good signal quality can be maintained over the full field of view. In particular, a substantially uniform image intensity can be achieved across the field of view for all relevant wavelengths. This includes a uniform illumination numerical aperture for all positions in the field of view for the first wavelength, and a substantially uniform imaging (light collection) numerical aperture for the one or more second wavelengths. Furthermore, the objective may have practically no lateral colour aberration, even at 50 µm chromatic focus plane shifts. As a result, chromatic focal shifts due to, e.g., manufacturing tolerances do not induce lateral colour shifts, as, with a deviation from telecentricity of less than 1 mrad (milliradian), even at 50 µm chromatic colour shifts, the lateral colour shifts are less than 50 nm. Evidently, longitudinal colour aberration, i.e., chromatic focus plane shift, is generally much smaller than 50 µm.

It is a further advantage of a telecentric objective that the image obtained by scanning is highly repeatable. A near constant magnification can be obtained even if thermal deviations and other effects induce focal plane shifts. With a deviation from telecentricity of less than 1 mrad at sample side, the magnification does not change significantly: over 25 µm focal plane shifts, only 0,0005 % magnification change occurs (< 25 nm over entire field of view). This also simplifies stitching a plurality of scans together, e.g., to form a 2D mosaicked image or a 3D image cube. Especially in the latter case, the fact that objects do not change shape or size for different focal depths greatly simplifies combining images obtained at different depths.

To this end, the microscope objective may comprise an aperture stop **210.** The aperture stop may be positioned, e.g., within the first lens group. Alternatively, the aperture stop may be positioned between the second lens group **106** and the one or more optical elements **107** (as depicted here). This way, the collected light of the one or more second wavelengths is not attenuated by the aperture stop, maximising signal strength.

In some embodiments, like the one depicted in **Fig. 2****,** the optical system further comprises corrective optical elements **122,124** configured to correct the light of the one or more second wavelengths, e.g., by correcting a focus error over the relevant part of the optical spectrum. This way, the objective may be used to obtain high quality images (i.e., spatially resolved measurements) based on the light of the one or more second wavelengths. However, in other embodiments, only a light intensity of the one or more second wavelengths needs to be detected, and in such embodiments, these further corrective optical elements may be left out. As the objective allows a very tight focus of the illumination light, any light received by detectors measuring light of the at least second wavelength, may be associated with the focal spot, and spatial resolution of this light may not be required.

**Fig. 2B** schematically depicts a differently arranged microscope objective according to an embodiment. In this example, the objective is essentially folded. This may reduce the length of the space in which the microscope objective is to be integrated. The combined length of the optical elements in the second lens group **106** can be considerable, e.g., in the order of decimetres.

The microscope objective in this example furthermore uses dichroic plate-beamsplitters **220,222.** However, other embodiments may use a different kind of beamsplitter for the first and/or second beamsplitter, e.g., a cube beamsplitter or a prism.

**Fig. 3** schematically depicts an example of a lens assembly of an optical system according to an embodiment. The object side is on the left side and the image plane is on the right side of the figure. In the depicted example, the first lens group **108** comprises six lenses L1-L6 and one aperture stop S1. The lenses L1, L2, and L4 are simple lenses while lenses L3, L5 and L6 are compound lenses. The second lens group **106** comprises four lenses L7-L10, of which lens L9 is a simple lens, while lenses L7, L8, and L10 are compound lenses. In between the first and second lens groups, there is space for one or more dichroic beam splitters (not shown). The one or more dichroic beam splitters may comprise a cubic beam splitter and/or a dichroic plate. If a dichroic plate is used, the dichroic plate may make a 45° angle with an optical axis of the optical system. The dichroic plate may also be placed under a different angle, e.g., the Brewster angle. In the region between the first and second lens groups, the light bundle is essentially collimated.

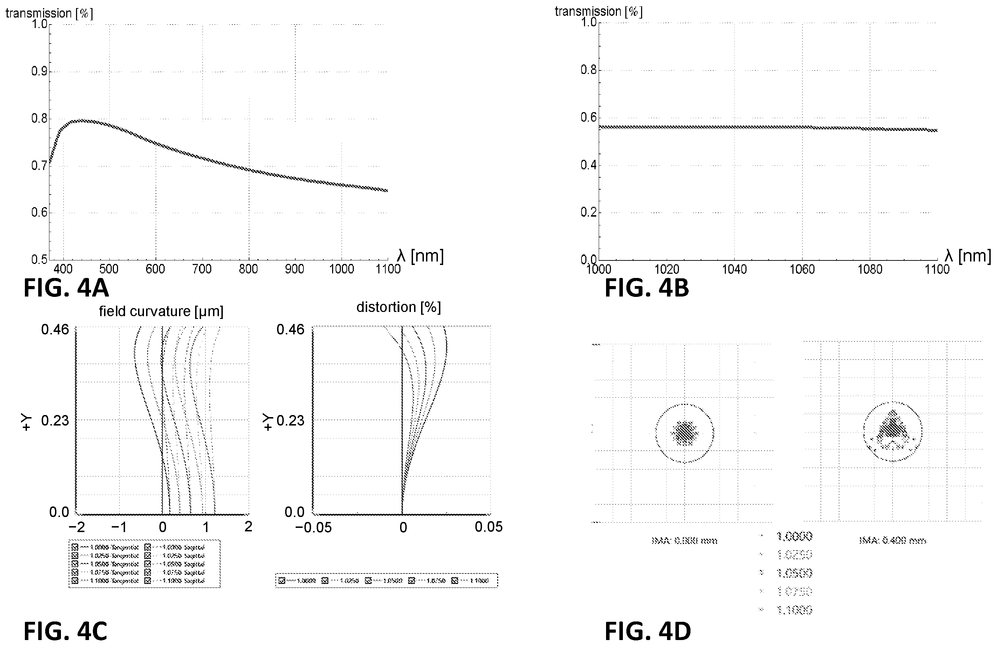

**Table 1** lists exemplary dimensions and materials of the optical system shown in **Fig. 3****.** The results shown in **Fig. 4A-D** were obtained using these exemplary values. These values were obtained by automated optimisation in Zemax, based on the following constraints and considerations. The first wavelength was selected as 1050±50 nm. The first lens group was optimised to maximise light collection for light with a wavelength between 350-750 nm (comprising the second and third wavelengths), while providing diffraction-limited imaging for light with a wavelength of 1000-1100 nm (the first wavelength). The second lens group was optimised to minimise distortions of the entire lens assembly at the first wavelength, providing diffraction-limited optics with a substantially flat field and minimal geometric distortion. Furthermore, the lens assembly was optimised to provide a substantially telecentric object side.

Evidently, the skilled person may determine numerous other suitable configurations, based on these or similar requirements. For example, in this case, the first wavelength was selected as 1050±50 nm. If a different first wavelength is used, the optimisation may result in a different lens assembly. Furthermore, in the current example, the lens dimensions were limited to spherical lenses; other embodiments may use aspherical lenses; however, this may lead to an increased cost and, in some cases, lower manufacture precision. In general, there is a trade-off between the various optimisation goals, for example, a different objective might trade a slightly higher field curvature for a higher light collection at the at least second wavelength.

For example, a lens assembly according to an embodiment may be obtained by optimising for a high-numerical-aperture diffraction-limited design at the first wavelength, e.g., between 1000-1100 nm, with the following set of constraints:
- field curvature is flat, e.g., < 1 µm within field of view;
- distortion-free image, e.g., < 0.025 %;
- telecentric at sample side, e.g., deviation from telecentricity < 1 mrad;
- in the first lens group, total transmission > 50% for light of the first and one or more second wavelengths (e.g., 335-1100 nm), using suitably selected coatings (e.g., broadband MgF₂ coatings) on the lenses of the first lens group;
- in the full optical system, total transmission > 50% of the light of the first wavelength (e.g., 1000-1100 nm), using suitably selected coatings (e.g., near-infrared optimised coatings) on the lenses of the second lens group;
- collimated light bundle between the first and second lens groups; and
- distance between the first and second lens groups sufficient (e.g., ≥ 100 mm) to place further optics, e.g. a beamsplitter.
Alternatively, one or more of these constraints can be part of the optimisation function. Other embodiments may use less, different and/or additional constraints. For example, constraints may be limited to the first and second lens groups, rather than the full optical system.

Additionally, manufacturability constraints may be imposed, e.g.:
- sufficiently large clear semi-diameter margin, e.g., 1.5 mm;
- limited diameter for certain lenses;
- limited curvature for achromats;
- et cetera.
Again, one or more of these constraints can be part of the optimisation function.

Furthermore, broadband anti-reflective coatings (e.g., MgF₂ @ 400 nm) were used on the first lens group, while coatings with a high efficiency for light with a wavelength between 1000-1100 nm (e.g., MgF₂/ZrO₂/CeF₂) was used for the second lens group. A broadband anti-reflective coating is especially advantageous if the light collected from the sample may have a relative wide range of wavelengths, e.g., fluorescent light with a large number of potential fluorescent markers, or (possibly multi-photon) auto-fluorescence signals. In general, a lower overall transmission of the light of the first wavelength can be acceptable, as this may be compensated for, at least to some extent, by increasing the power of the light source.

However, depending on the envisaged use case, different coatings may be used, especially for the first lens group. For example, when the optical system is used for non-linear microscopy, dual or triple wavelengths band coatings may be used that have good anti-reflective properties at the first (principal) wavelength and at the at least second wavelength, e.g. second and/or third harmonics.

The depicted lens assembly was optimised for use with glycerol as an immersion medium, and has, in that case, a numerical aperture of about 1.2. An advantage of using glycerol is that it is non-toxic and available in sterilised form, so that it can be used safely on living specimens, and is generally easier to handle than toxic immersion media. This is especially relevant for bed-side microscopy applications. However, the refractive index of glycerol is relatively low (about 1.46 for pure glycerol, lower for mixtures with water). If another immersion medium is used with a higher refractive index, a higher numerical aperture may be obtained.

The depicted lens assembly has a magnification of about 11.5×.

**Table 1. Lens properties of lens assembly shown in Fig. 3. Empty lines in between lenses denote air gaps.**

| **Lens** | **Curv ature radius [mm]** | | **Thickness [mm]** | **Semi-diameter [mm]** | | **Material** |
|---|---|---|---|---|---|---|
| | (front) | (back) | | (front) | (back) | |
| **Object plane** | | | | | | |
| oil | | | | | | Glycerol |
| L1 | ∞ | -11.9 | 17.6 | 2.54 | 12.7 | N-BK7HTI |
| | | | 0.50 | | | |
| L2 | -80.0 | -47.7 | 7.11 | 16.1 | 18.1 | N-LAK7 |
| | | | 0.5 | | | |
| L3a | 186 | 32.1 | 2.00 | 19.7 | 21.3 | N-FK5 |
| L3b | 32.1 | -47.1 | 18.1 | 21.3 | 22.8 | CAF2 |
| | | | 0.50 | | | |
| STOP | | | | 22.1 | | |
| | | | 11.9 | | | |
| L4 | 49.1 | -100 | 24.2 | 27.2 | 26.3 | CAF2 |
| | | | 1.22 | | | |
| L5a | 68.3 | 29.2 | 2.76 | 24.6 | | N-KZFS11 |
| L5b | 29.2 | -54.3 | 25.0 | 24.6 | | CAF2 |
| | | | 3.32 | | | |
| L6a | -37.2 | 28.8 | 18.0 | 19.3 | 18.4 | F2HT |
| L6b | 28.8 | -214 | 8.51 | 18.4 | 18.5 | CAF2 |
| space for beam splitter(s) | | | 100 | 22.4 | | |
| L7a | 118 | 52.2 | 15.8 | 22.5 | | N-KZFS4HT |
| L7b | 52.2 | -1980 | 11.4 | 22.5 | | N-LAF35 |
| | | | 2.41 | | | |
| L8a | 63.7 | -43.9 | 26.8 | 20.5 | | N-BK7 |
| L8b | -43.9 | 76.9 | 3.29 | 20.5 | | N-KZFS11 |
| | | | 1.33 | | | |
| L9 | 17.7 | 5.58 | 20.7 | 14.7 | 6.06 | P-LASF47 |
| | | | 8.96 | | | |
| L10a | -12.8 | -23.2 | 8.98 | 6.35 | 8.05 | N-SF5 |
| L10b | -23.2 | -12.8 | 6.37 | 8.05 | 8.96 | N-BALF4 |
| | | | 13.4 | | | |
| **Image plane** | | | | 5.72 | | |

**Fig. 4A-4D** depict various optical properties of the embodiment depicted in **Fig. 3****.** In particular, **Fig. 4A** depicts the total transmission, including both internal transmission losses and reflection losses, of the first lens group for wavelengths in the range 370-1100 nm. For wavelengths in the range 370-770 nm, the total transmission is higher than 0.7, for wavelengths in the range 770-1100 nm, the total transmission is higher than 0.65. This graph was obtained using a broadband MgF₂ coating optimised at 400 nm. As alluded to above in the description of **Fig. 3****,** the total transmission can probably be improved for one or more particularly relevant wavelengths using different anti-reflective coatings, possibly at the cost of lower transmission at other wavelengths.

**Fig. 4B** depicts the total transmission, including both internal transmission losses and reflection losses, of the full lens assembly (comprising the first and second lens groups) for wavelengths in the range 1000-1100 nm. The transmission loss is dominated by the (reflective) losses in the first lens group.

**Table 2** lists the internal transmission at 10 mm of the glasses used in the lens assembly shown in **Fig. 3** and listed in **Table 1.** The values are obtained from Schott. It can be seen that the first lens group uses only glasses with a high to very high transmission in the UV range, whereas the second lens group comprises several glass with much lower internal transmission and even one is substantially zero internal transmission. It should be noted that the full transmission is lower, due to reflective losses at the surfaces. These may be reduced using anti-reflective coatings.

Combining the data in **Table 1** and **Table 2,** the internal transmittance for the first lens group is 0.760, 0.986, and 0.988 for light with a wavelength of 350 nm, 546 nm, and 1060 nm, respectively; the internal transmittance for the second lens group is 0.000, 0.977, and 0.986 for light with a wavelength of 350 nm, 546 nm, and 1060 nm, respectively; and the internal transmittance for the full lens assembly is 0.000, 0.963, and 0.974 for light with a wavelength of 350 nm, 546 nm, and 1060 nm, respectively. This clearly shows the need to deflect at least the ultraviolet light in between the first and second lens groups.

**Table 2. Internal transmittance at 10 mm thickness for three selected wavelengths. Data obtained from Schott data sheets for the respective glasses.**

| **glass** | **350 nm** | **546 nm** | **1060 nm** |
|---|---|---|---|
| First lens group | | | |
| CAF2 | 0.999 | 0.999 | 0.999 |
| F2HT | 0.927 | 0.999 | 0.999 |
| N-BK7HTI | 0.985 | 0.999 | 0.999 |
| N-FK5 | 0.995 | 0.996 | 0.999 |
| N-KZFS11 | 0.882 | 0.997 | 0.999 |
| N-LAK7 | 0.908 | 0.998 | 0.999 |

| Second lens group | | | |
|---|---|---|---|
| N-BALF4 | 0.679 | 0.998 | 0.997 |
| N-BK7 | 0.967 | 0.998 | 0.999 |
| N-KZFS4HT | 0.815 | 0.997 | 0.998 |
| N-KZFS11 | 0.882 | 0.997 | 0.999 |
| N-LAF35 | 0.788 | 0.998 | 0.998 |
| N-SF5 | 0^{*)} | 0.995 | 0.998 |
| P-LASF47 | 0.657 | 0.998 | 0.999 |

| | | | |
|---|---|---|---|
| ^{*)} Lowest internal optical transmission value provided is 0.116 @ 365 nm | | | |

**Fig. 4C** depicts the field curvature and distortion of the lens assembly shown in **Fig. 3****.** The left-hand graph shows the field curvature for light with a wavelength of 1000-1100 nm (left to right) in steps of 25 nm. Both the tangential (solid) and sagittal (dotted) components are shown. The horizontal axis shows the curvature in mm and the vertical axis shows the radial distance in mm from the optical axis in the sample plane. It can be seen that the curvature is less than about 1 µm up to almost 0.5 mm radius.

The right-hand graph of **Fig. 4C** shows the corresponding distortion compared to the image centre for light with a wavelength of 1000-1100 nm (right to left) in steps of 25 nm. The horizontal axis shows the distortion in % and the vertical axis shows the radial distance in mm from the optical axis in the sample plane. It can be seen that the distortion is less than about 0.02 % up to almost 0.5 mm radius.

**Fig. 4D** depicts spot diagrams at the sample for light with a wavelength of 1000-1100 nm. The circle represents the Airy disc with a radius of 0.527 µm. The left-hand graph depicts the spot image at the image centre (i.e., on the optical axis), whereas the right-hand graph depicts the spot image at 0.4 mm radial distance from the image centre. The root mean square (RMS) spot radius increases from 0.142 µm to 0.246 µm at 0.4 mm distance. This shows that the lens assembly is diffraction limited for light with a wavelength in the range 1000-1100 nm for a radial distance of at least 0.4 mm.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. An optical system for a non-linear microscope comprising, in order from an object side:
a first lens group (108) configured for focussing illumination light of a first wavelength on a sample and collecting light of at least a second wavelength, the first wavelength being between 700 nm and 1200 nm, preferably between 1000-1200 nm or between 750-850 nm, more preferably between 1040-1080 nm or about 800 nm, the first lens group having a transmission coefficient of at least 0.5, more preferably at least 0.6, for light of the first wavelength, and at least 0.3, preferably at least 0.5, more preferably at least 0.6, for the light of the at least second wavelength;
one or more optical elements (107) configured for splitting the light of the at least second wavelength from the light of first wavelength; and
a second lens group (106) configured for correcting an aberration of the first lens group (108) for the light of the first wavelength;
**characterized in that**
the optical system is configured to be substantially object-space telecentric for light of the first wavelength, wherein the deviation from telecentricity being smaller than 1 mrad.

2. The optical system as claimed in claim 1, wherein the light of the first wavelength is infrared light and wherein the light of the at least second wavelength comprises visible light and/or ultraviolet light.

3. The optical system as claimed in claim 1 or 2, wherein the optical system has a numerical aperture of at least 0.9, preferably at least 1.1, more preferably at least 1.2.

4. The optical system as claimed in any one of the preceding claims, wherein the light of the at least second wavelength comprises light with a wavelength equal to half the first wavelength and/or comprises light with a wavelength equal to one third the first wavelength.

5. The optical system as claimed in any one of the preceding claims, wherein the one or more optical elements comprise a first dichroic mirror for reflecting light of at least a first spectral part of the one or more second wavelengths, and, optionally, a second dichroic mirror for reflecting light of a second spectral part, different from the first spectral part, of the one or more second wavelengths.

6. The optical system as claimed in claim 5, wherein the first dichroic mirror is configured to compensate a distortion, e.g. a shift and/or dispersion, of the light of the first wavelength caused by the second dichroic mirror.

7. The optical system as claimed in any one of the preceding claims, wherein the first and second lens groups are configured such that for the light of the first wavelength, the curvature of a focal field is less than 4 µm, preferably less than 2 µm, more preferably less than 1 µm, within a radial distance of at least 250 µm, preferably at least 400 µm from a central axis of the optical system.

8. The optical system as claimed in any one of the preceding claims, wherein the optical system is configured to have a field of view of at least (0.25 mm)², preferably at least (0.5 mm)².

9. The optical system as claimed in any one of the preceding claims, further comprising corrective elements for the light of the at least second wavelength.

10. A scanning non-linear microscopy system comprising an optical system as claimed in any one of the preceding claims, a laser source, a 2D or 3D scanner system to move a focal spot of the light of the first wavelength over or through the sample, and at least one detector for detecting the light of the at least second wavelength.

## Patentansprüche

1. Optisches System für ein nicht-lineares Mikroskop, das in Reihenfolge von einer Objektseite aus aufweist:
eine erste Linsengruppe (108), die zum Fokussieren von Beleuchtungslicht einer ersten Wellenlänge auf eine Probe und zum Sammeln von Licht zumindest einer zweiten Wellenlänge ausgebildet ist, wobei die erste Wellenlänge zwischen 700 nm und 1200 nm, vorzugsweise zwischen 1000-1200 nm oder zwischen 750-850 nm, bevorzugter zwischen 1040-1080 nm oder etwa 800 nm beträgt, wobei die erste Linsengruppe einen Transmissionskoeffizienten für Licht der ersten Wellenlänge von zumindest 0,5, bevorzugter zumindest 0,6, und für das Licht der zumindest einen zweiten Wellenlänge von zumindest 0,3, vorzugsweise zumindest 0,5, bevorzugter zumindest 0,6, aufweist;
ein oder mehrere optische Elemente (107), die zum Trennen des Lichts der zumindest einen zweiten Wellenlänge von dem Licht der ersten Wellenlänge ausgebildet sind; und
eine zweite Linsengruppe (106), die zum Korrigieren einer Aberration der ersten Linsengruppe (108) für das Licht der ersten Wellenlänge ausgebildet ist;
**dadurch gekennzeichnet, dass** das optische System so ausgebildet ist, dass es im Wesentlichen telezentrisch für Licht der ersten Wellenlänge im Objektraum ist, wobei die Abweichung von der Telezentrizität kleiner ist als 1 mrad.

2. Optisches System nach Anspruch 1, wobei das Licht der ersten Wellenlänge Infrarot-Licht ist, und wobei das Licht der zumindest einen zweiten Wellenlänge sichtbares Licht und/oder ultraviolettes Licht aufweist.

3. Optisches System nach Anspruch 1 oder 2, wobei das optische System eine numerische Apertur von zumindest 0,9, vorzugsweise zumindest 1,1, bevorzugter zumindest 1,2 aufweist.

4. Optisches System nach irgendeinem der vorhergehenden Ansprüche, wobei das Licht der zumindest einen zweiten Wellenlänge Licht mit einer Wellenlänge aufweist, die gleich der halben ersten Wellenlänge ist, und/oder Licht mit einer Wellenlänge aufweist, die gleich einem Drittel der ersten Wellenlänge ist.

5. Optisches System nach irgendeinem der vorhergehenden Ansprüche, wobei das eine oder die mehreren optischen Elemente einen ersten dichroitischen Spiegel zum Reflektieren von Licht zumindest eines ersten spektralen Teils der einen oder mehreren zweiten Wellenlängen aufweisen, und optional einen zweiten dichroitischen Spiegel zum Reflektieren von Licht eines zweiten spektralen Teils der einen oder mehreren zweiten Wellenlängen, der von dem ersten spektralen Teil verschieden ist, aufweisen.

6. Optisches System nach Anspruch 5, wobei der erste dichroitische Spiegel dazu ausgebildet ist, eine Distorsion, bspw. eine Verschiebung und/oder Dispersion, des Lichtes der ersten Wellenlänge zu kompensieren, die von dem zweiten dichroitischen Spiegel verursacht wird.

7. Optisches System nach irgendeinem der vorhergehenden Ansprüche, wobei die erste und die zweite Linsengruppe derart ausgebildet sind, dass für das Licht der ersten Wellenlänge die Krümmung eines Fokusfeldes kleiner ist als 4 µm, vorzugsweise kleiner als 2 µm, bevorzugter kleiner als 1 µm, innerhalb eines radialen Abstandes von zumindest 250 µm, vorzugsweise zumindest 400 µm, von einer zentralen Achse des optischen Systems.

8. Optisches System nach irgendeinem der vorhergehenden Ansprüche, wobei das optische System so ausgebildet ist, dass es ein Gesichtsfeld von zumindest (0,25 mm)², vorzugsweise zumindest (0,5 mm)² aufweist.

9. Optisches System nach irgendeinem der vorhergehenden Ansprüche, weiterhin mit korrigierenden Elementen für das Licht der zumindest einen zweiten Wellenlänge.

10. Nicht-lineares Abtast-Mikroskopie-System, das ein optisches System nach irgendeinem der vorhergehenden Ansprüche, eine Laserquelle, ein 2D- oder 3D-Abtastsystem, um einen Brennpunkt des Lichtes der ersten Wellenlänge über oder durch die Probe zu bewegen, und zumindest einen Detektor zum Detektieren des Lichtes der zumindest einen zweiten Wellenlänge aufweist.

## Revendications

1. Système optique pour microscope non linéaire comprenant, dans l'ordre à partir d'un côté objet :
un premier groupe de lentilles (108) configuré pour focaliser une lumière d'éclairage d'une première longueur d'onde sur un échantillon et collecter une lumière d'au moins une seconde longueur d'onde, la première longueur d'onde étant comprise entre 700 et 1200 nm, de préférence entre 1000 et 1200 nm ou entre 750 et 850 nm, plus préférentiellement entre 1040 et 1080 nm ou environ 800 nm, le premier groupe de lentilles présentant un coefficient de transmission d'au moins 0,5, plus préférentiellement d'au moins 0,6, pour la lumière de la première longueur d'onde, et d'au moins 0,3, de préférence d'au moins 0,5, plus préférentiellement d'au moins 0,6, pour la lumière de l'au moins une seconde longueur d'onde ;
un ou plusieurs éléments optiques (107) configurés pour séparer la lumière de l'au moins une seconde longueur d'onde de la lumière de la première longueur d'onde ; et
un second groupe de lentilles (106) configuré pour corriger une aberration du premier groupe de lentilles (108) pour la lumière de la première longueur d'onde ;
**caractérisé en ce que** le système optique est configuré pour être sensiblement télécentrique dans l'espace objet pour la lumière de la première longueur d'onde, dans lequel l'écart par rapport à la télécentricité est inférieur à 1 mrad.

2. Système optique selon la revendication 1, dans lequel la lumière de la première longueur d'onde est de la lumière infrarouge et dans lequel la lumière de l'au moins une seconde longueur d'onde comprend de la lumière visible et/ou de la lumière ultraviolette.

3. Système optique selon la revendication 1 ou 2, dans lequel le système optique présente une ouverture numérique d'au moins 0,9, de préférence d'au moins 1,1, plus préférentiellement d'au moins 1,2.

4. Système optique selon l'une quelconque des revendications précédentes, dans lequel la lumière de l'au moins une seconde longueur d'onde comprend de la lumière d'une longueur d'onde égale à la moitié de la première longueur d'onde et/ou comprend de la lumière d'une longueur d'onde égale à un tiers de la première longueur d'onde.

5. Système optique selon l'une quelconque des revendications précédentes, dans lequel les un ou plusieurs éléments optiques comprennent un premier miroir dichroïque pour réfléchir la lumière d'au moins une première partie spectrale des une ou plusieurs secondes longueurs d'onde, et, facultativement, un second miroir dichroïque pour réfléchir la lumière d'une seconde partie spectrale, différente de la première partie spectrale, des une ou plusieurs secondes longueurs d'onde.

6. Système optique selon la revendication 5, dans lequel le premier miroir dichroïque est configuré pour compenser une distorsion, par exemple un décalage et/ou une dispersion, de la lumière de la première longueur d'onde provoquée par le second miroir dichroïque.

7. Système optique selon l'une quelconque des revendications précédentes, dans lequel les premier et second groupes de lentilles sont configurés de telle sorte que, pour la lumière de la première longueur d'onde, la courbure d'un champ focal est inférieure à 4 µm, de préférence inférieure à 2 µm, plus préférentiellement inférieure à 1 µm, à une distance radiale d'au moins 250 µm, de préférence d'au moins 400 µm depuis un axe central du système optique.

8. Système optique selon l'une quelconque des revendications précédentes, dans lequel le système optique est configuré pour présenter un champ de vision d'au moins (0,25 mm)², de préférence d'au moins (0,5 mm)².

9. Système optique selon l'une quelconque des revendications précédentes, comprenant en outre des éléments correcteurs pour la lumière de l'au moins une seconde longueur d'onde.

10. Système de microscopie non linéaire à balayage comprenant un système optique selon l'une quelconque des revendications précédentes, une source laser, un système de scanner 2D ou 3D pour déplacer un point focal de la lumière de la première longueur d'onde sur ou à travers l'échantillon, et au moins un détecteur pour détecter la lumière de l'au moins une seconde longueur d'onde.
